# EUROPEAN PATENT SPECIFICATION

(11) **EP 2 276 351 B1**
(45) Date of publication and mention of the grant of the patent: **25.04.2012**
(21) Application number: 09729669.3
(22) Date of filing: 13.03.2009
(51) Int. Cl.: A23G 9/04, F25C 1/00, F25D 3/10

(54) **ICE CONTAINING PARTICLES FOR USE IN MAKING FROZEN ICE DRINKS**
PARTIKELHALTIGES EIS FÜR DIE VERWENDUNG BEI DER HERSTELLUNG VON GEFRORENEN EISGETRÄNKEN
PARTICULES CONTENANT DE LA GLACE POUR UNE UTILISATION DANS LA FABRICATION DE BOISSONS GLACÉES CONGELÉES

(30) Priority: 11.04.2008 US 44095
(43) Date of publication of application: 26.01.2011
(73) Proprietor: Nestec S.A., 1800 Vevey (CH)
(72) Inventor: ELLIS, Kendra Nicole, Piedmont California 94611 (US); VAGHELA, Madansinh, Bakersfield CA 93312 (US); PANYAM, Dinakar, Fremont CA 94536 (US); WINDHAB, Erich Josef, CH-8261 Hemishofen (CH); DÜRR-AUSTER, Natalie Béatrice Janine, CH-4053 Basel (CH); BIGLER, Peter Walter, CH-8700 Küstnacht (CH)
(74) Representative: Baumgartner Harris, Pauline
(86) International application number: PCT/EP2009/052975
(87) International publication number: WO 2009/124821

(56) References cited:
- WO-A2-2006/007922
- DE-A1- 19 750 677
- DE-A1- 19 750 679
- US-A- 3 619 205
- US-A- 4 982 577
- US-A- 5 394 705
- US-A- 5 438 839
- US-A1- 2005 008 754
- US-A1- 2006 196 194

## Description

### Background

The invention relates to a process for the manufacture of ice containing particles of a certain size and composition that facilitate easy mixing with added liquid to make frozen beverages such as milk shakes, smoothies or other frozen ice drinks such as frozen margueritas or daiquiris. The basis behind the invention is the control of the Tg of the compositions used to form the ice containing particles, so that the resulting ice containing particles can be shipped and stored at conventional refrigerator freezer temperatures until use.

Ice particles are needed in order to form frozen ice drinks. Various mechanical means are used to crush ice cubes or blocks to the desired size for use in such products. Alternatively, ice particles can be made by cooling water droplets to low temperatures. The glass transition temperature (Tg) of water is -130°C. If water is supercooled rapidly to below that temperature, the resulting ice particles form a flowable and non-sticking powder like particles. These particles are not readily usable in commercial frozen ice drinks, however, due to the relatively low temperatures needed for their handling and storage.

Traditional ice cream manufacturing practice advocates the forming, shaping and packaging of the product close to the extrusion temperature of ice cream when 40 to 60% of the water in the product is frozen. In this state the product is still relatively soft and pliable and exhibits strong surface-adhesive properties. A frozen beverage like a milkshake or smoothie is often prepared by mixing handscooped ice cream or sherbert with milk or water followed by blending using various mechanical means. While this technique is well established, it is generally conducted in fast food or restaurant establishments and not by a user in the home due to the amount of equipment and effort needed to prepare a single serving.

A relatively recent trend has been towards the use of cryogenic freezing to make small beads or discrete particles or beads of predominantly spherical shape by immersion or exposure to a very cold environment such as liquid nitrogen or nitrogen vapor. During these processes small droplets of liquid mix undergo a very rapid or instant drop in temperature which freezes them to a temperature below the glass transition temperature. Examples of this are found in US patents 4,982,577, 5,438,839 and 6,223,542; US patent publications 2005/0008754A1 and 2006/0196194A1; and PCT publication WO2006/007922. As long as these cryogenically frozen particles are stored below the Tg, they will remain free flowing and not stick to each other.

Attempts have been made to use these particles for the preparation of frozen beverages in individual portions by adding a liquid such as milk to a container partially filled with these particles and shaking vigorously by hand after closing with a lid. This has not been successful to date since the ice particles tend to clump together or adhere after contact with liquid. This detracts from the organoleptic properties that are desired in such products and requires further attention to break up these clumps. Generally, the level or degree of hand shaking that is necessary to break up these clumps is too high for the ordinary user, and while agitation with a spoon, whisk or manual or automatic mixing device can break up the clumps, this defeats the purpose of trying to make the product in a simple manner.

To facilitate easier mixing of the ice particles with a liquid it would be highly desirable to provide the particles with a finer size and higher surface area to volume ratio. One way of achieving this is by converting the liquid mix to smaller entities like droplets or mist before rapidly freezing by exposing to a cryogenic medium such as liquid nitrogen. This is described in German patent DE 197 50 679, which relates to the production of ice particles from an aerated liquid mix or foam. Even though finer particles do mix more easily with a liquid, there remains a tendency for clumping or sticking after contact with the liquid and agitation still is required to make the final product.

Accordingly, there is a need for ice containing particles having enhanced properties for use in making frozen ice drink products without requiring extensive mixing, and these are now provided by the present invention.

### Summary of the Invention

The invention relates to a process for preparing ice containing particles which comprises preparing a liquid formulation that includes water, a glass transition temperature (Tg) elevating agent, a sweetener and a surfactant so that the formulation has a Tg of -5°C to -15°C; and spraying the liquid formulation into a cryogenic atmosphere that is at least 10°C below the Tg of the formulation to form a frozen mass to form ice containing particles and associating a spacer starch with the ice containing particles after formation to provide spacing between and reduce sticking of the particles, wherein the spacer starch particles are smaller than the ice containing particles. These particles can be used for a variety of purposes but preferably are used for forming frozen ice drinks in a simple, rapid and convenient manner. This is particularly useful when a single serving of such drinks is desired as no special equipment to make the drink is required.

In this process, the liquid formulation contains from 0.25 to 25 weight percent surfactant, from 0.01 to 1.25 weight percent sweetener, from 5 to 70 weight percent Tg elevating agent and water. Advantageously, the liquid formulation contains from 0.5 to 5 weight percent surfactant, from 0.025 to 0.75 weight percent sweetener, from 7.5 to 35 weight percent Tg elevating agent Preferably, the liquid formulation contains from 0.5 to 2 weight percent surfactant, from 0.05 to 0.5 weight percent sweetener, from 10 to 20 weight percent Tg elevating agent. The preferred surfactant is a poly glycerol ester, poly glycerol mono stearate or poly glycerol poly ricinoleate, the preferred sweetener is sucralose or acesulfame potassium, and the preferred Tg elevating agent is a macromolecular biopolymer having a molecular weight of 800 to 15,000 Daltons.

The cryogenic atmosphere is typically at a temperature of -20°C to -200°C. Typically, it will be between 30 to 50 degrees C below the Tg of the formulation to form the frozen mass. The resulting ice containing particles have a mean particle size of 0.01 to 5mm, but preferably from 0.2 to 0.8mm.

The process includes associating a spacer starch to the ice containing particles to provide spacing between and reduce sticking of the particles. These spacer starch particles are smaller than the ice containing particles and facilitate the movement of the ice particles over each other. The starch particles also contribute to thickening when they dissolve in the liquid resulting from the melted drink. This facilitates handling and formation of the drink as well as to its organoleptic properties.

The process further comprises packaging the ice containing particles in a container such as a bag, pouch or other sealed container which is sized to hold single or multiple servings. Preferably, the container is a cup that includes a removable lid. Alternatively, the lid may be one that holds the ice containing particles therein and that can be placed on a cup to introduce the ice containing particles into the cup.

The invention also relates to a method of making a frozen ice drink which comprises combining a sufficient amount of ice containing particles prepared according to the processes disclosed herein with sufficient amounts of a liquid and mixing to form the drink. The ice containing particles are generally present in an amount of 10% to 70% wt. based on the total amount of ice containing particles and liquid. Preferably, the ice containing particles are present in a single serving size container to which the liquid is added and the mixing of the ice containing particles and liquid is achieved by shaking of the container. As noted above, the container may include a removable lid wherein the lid is removed prior to introduction of the liquid into the container. Typical liquids include milk, fruit juice, coffee, tea, an alcoholic beverage, or a liquid beverage forming mix.

Another embodiment of the invention relates to a packaged ready to use frozen ice drink product which comprises a container and ice containing particles prepared according to the processes disclosed herein. The container is generally in the form of a bag, pouch or other sealed container which is sized to hold single or multiple servings. Again, the preferred container is a cup that includes a removable lid. Alternatively, the container may be a lid that holds the ice containing particles therein and that can be placed on a cup to introduce the ice containing particles into the cup.

Further embodiments of the invention include methods of making a single serving of a frozen ice drink which comprises providing a cup containing a single serving of a liquid, adding ice containing particles prepared according to the processes disclosed herein; and mixing the ice containing particles and liquid to form the drink. Any of the products disclosed herein can be used to facilitate the combining of the liquid with the ice containing particles to form the drink.

When the container is a bag, pouch or other sealed container which is sized to hold single or multiple servings, the liquid can be provided in a cup with the ice containing particles added to the liquid in the cup with stirring to form the drink. When the container is a cup which is sized to hold a single serving of the drink, and the liquid can be added to the ice containing particles with stirring or shaking to form the drink. When the cup includes a removable lid, the lid can be removed prior to introduction of the liquid into the cup and then replaced to allow shaking of the cup to mix the ice containing particles with the liquid. Generally, hand shaking for approximately 20 to 80 seconds and preferably 30 to 60 seconds is sufficient for most single size servings.

Another embodiment of the invention relates to ice containing particles obtainable by a a process as defined above. These ice containing particles have irregular shapes and a principal diameter of 1 mm or less. The proportions and components include all those that are disclosed herein.

The invention also relates to the use of the ice containing particles disclosed herein to form a milkshake or other frozen ice drink.

Yet another embodiment relates to the use of a Tg elevating agent in combination with a sweetener, surfactant and water to make ice containing particles having the desired Tg of between -5°C and -15°C.

The invention also relates to the use of spacer particles for improving flowability of ice containing particles, wherein the spacer particles are of smaller size and are present in an amount of 1 to 10% by weight of the ice containing particles to allow liquid to pass between the ice containing particles to provide hydration and formation of a frozen drink. The preferred spacer particles are starch particles, and preferably those which are present in a condition and amount such that they are capable of at least partially dissolving in the liquid that is added to form the frozen drink to contribute to the organoleptic properties of the liquid by providing thickening.

### Brief Description of the Drawings

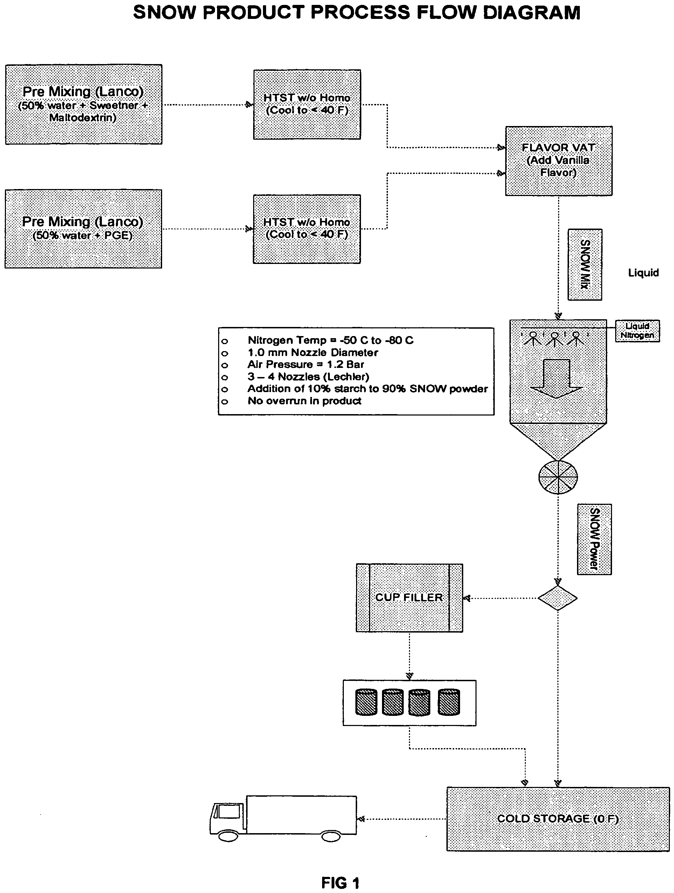

The appended figure is a process flow diagram for making the ice containing particles of the invention.

### Detailed Description of the Preferred Embodiments

It has now been found that by adding certain Tg elevating agents, the Tg of the composition can be raised to the temperature range of -5°C to -15°C with the resulting ice containing particles also being in the form of a flowable and non-sticking powder like mass. These Tg agents include macromolecular biopolymeric of relatively long chain length, e.g., greater larger than 800 to 1000 Daltons, or in case of starch based syrups up to a maximum of 15,000 Daltons. These agents impart a Tg at a temperature range that is in line with conventional refrigeration/freezer equipment. Various starches and other polysaccharides are known to have a Tg in the range of around 180°C to 200°C in their dry state. These differ based on molecular weight and other properties such as water content, gelatinization temperature, and storage time. When these type materials are mixed with water, the resulting solution containing 5% to 70%wt. water has a Tg in the desirable range of -5°C to -10°C.

A preferred biopolymer macromolecule is a starch such as corn, wheat or potato starch and related partially enzymatically degraded starch syrups. Such preferred syrups have dextrose equivalents ("DE-values") of between 1 and 10 and have a molecular weight of 5,000 to 15,000 Daltons. Conveniently, these starches or starch syrups can be enzymatically treated to control viscosity and to also provide a desired level of sweetness. Most preferred are starch syrups such as corn syrup. It is also possible to use other macromolecular components to increase the glass transition temperature of respective watery solutions. Such macromolecular components include other polysaccharides (e.g. maltodextrins, polydextroses having a dextrose equivalent of between 1 and 10, pectins, carrageens, galactomannans, xanthans and celluloses or microcellulose materials and their derivatives). These may also impart other beneficial functions such as nutritional or non-digestible properties, sweetness, texture and demixing stability to the composition. The molecules may be linear or branched or otherwise provided that they otherwise fall within the other parameters described herein. One or more of these agents can be used as desired.

Other materials can be added to the composition provided that the Tg is maintained in the desired range of -5°C to -10°C. Various sweeteners can be added. High amounts of low molecular weight sweeteners like sucrose are not desirable since sucrose acts as a plasticizer decreasing the Tg of the composition. Some smaller amounts of sugar can be added provided that the starch is increased adequately to maintain the Tg in the desired range. Artificial sweeteners may be added instead of sugar, but these would be in very low amounts (tenths of a percent) to avoid the imparting of excessive sweetness. The artificial sweetener may be saccharin, cyclamates, acetosulfame, L-aspartyl based sweeteners such as aspartame, and mixtures of these. If an artificial sweetener is used, it may be suitably combined with a bulking agent. Preferred sweeteners are sucralose in an amount of 0.05 % by weight of the formulation and acesulfame potassium in an amount of 0.015% by weight of the formulation. Erytritol and other high intensity sweeteners can also be used. The sweetener is present in an amount of 0.01 to 1.25% by weight of the composition.

Surfactants are also included in the formulations that are to be frozen into ice containing particles. The preferred surfactants delay ice formation so that particles of the desired size are obtained. The surfactant also affects the dispersibility of the ice containing particles during storage and shaking. A wide variety of surfactants can be selected for use in the present invention. Preferably, a polyglycerol ester (PGE) is used since it meets all the requirements for the surfactant. Other surfactants include poly glycerol mono stearate (PGMS) or poly glycerol poly ricinoleates (PGPR) and related long chain compounds. Lecithins and phospholipids can also be used as well as other amphiphilic molecules. These surfactants are used in an amount of 0.25 to as much as 25% and preferably from 0.5 to 2% by weight of the formulation. It is also possible to use ice structuring proteins, antifreeze proteins or similar materials added to an amount of 1 ppm to 0.5%.

The resulting particle size is also important in providing ice containing particles that can be used to provide "instant" milk shakes. The sizes of the particles must not be too small so as to form strong clumps or lumps when being mixed with fluids such as milks or juices. Alternatively, they cannot be too large so that they are not properly suspended by the fluid to form a flowable beverage or cause a too grainy and rough mouth feel. The desirable sizes of the ice containing particles are in the range of 0.1 to 1.5mm; and preferably 0.2 to 1 mm. A mean size of 0.2 to 0.5mm is highly desirable although for certain beverages, the upper end of the desirable range can be around 0.8mm. The larger sizes are more desirable when a more grainy US type product is desired, while the smaller particles are more desirable for European type products.

To further assist in keeping the ice containing particles from sticking to each other, a small amount of starch or other solid particle systems adhering to the ice containing particle surface is added to maintain small bridges between the particles as "spacers" to enable the fluid to more easily pass between the particles to form the frozen drink. The preferred types of these "spacer starches" are those which either dissolve rapidly or do not dissolve but also do not stick too strongly to the ice containing particle surfaces in order to support lump breakup under shaking conditions. A preferred spacer starch is a cold soluble pre-gelatinized potato starch that is gelatinized to around 15% to 90% and preferably around 10% to 20%. Other useful starches include the so-called "pudding starches" wherein 10% to 33% is pre-gelatinized.

The pre-gelatinized starches are provided in particles sized to be smaller than the ice containing particles, and generally this means that they are smaller than 200 microns. Typically, these starch particles should be around 1/2 to 1/20 the size of the ice containing particles. For example, the gelatinized starch particles may have a size of 10 to 100 microns when the ice particles are 200 to 500 microns (0.2 to 0.5mm). The starch particles are separately added to the ice containing particles after the ice containing particles are formed in the cryogenic freezing step. When uniformly mixed with the ice containing particles, these starch particles act as spacers to allow the liquid to pass between the ice containing particles to provide proper hydration and formation of the frozen drink during shaking. These spacer starches also provide a number of other advantages, including an improvement in the free flowing ability of ice containing particles; the avoidance of lumping or clumping of the particles when milk is added; the ability to adjust the "graininess" of the final ice drink after formation, and the ability to increase the consistency or thickness of the mouthfeel of the frozen ice drink in the mouth during consumption.

The total amount of starch in the ice containing particles and frozen drink contributes to the viscosity of the drink when fully melted in the mouth during consumption. The amounts used also impart the desired creaminess of the fluid, but cannot be present in such an amount to undesirably thicken the consistency of the drink. The preferred amount of starches for this embodiment will generally be an amount of between 1 and 60%, and preferably 10% to 20%, for the Tg elevating agent (e.g., the corn syrup or other macromolecular biopolymer that is provided in the composition that is supercooled and formed into the ice containing particles), and 1 to 10%, and preferably 3 to 5%, of the spacer starch (e.g., the potato or other pre-gelatinized starch that is provided to assist in the prevention of sticking of the ice containing particles). These weights are based upon the weight of the ice containing particles.

The ice containing particles can be made in the equipment disclosed in German patent DE 19750679. Basically, this equipment includes a spray tower that contains a cryogenic environment into which the composition is sprayed to form the ice containing particles. The environment at ambient pressure inside the tower is cooled to at least 10°C below the glass transition temperature of the liquid formulation so that the spray droplets from the nozzle are instantaneously frozen to a temperature below the Tg of the composition under maximum freeze concentrated conditions. The glassy shell which is formed around the frozen droplets as well as internal glassy lamellae surrounding the ice crystals prevent the particles from sticking to each other on a largely expanded time scale while keeping the moisture inside each droplet in a frozen state if the particles are stored below respective glass transition temperatures of the outer particle shell or of the internal lamellae. The powder is then collected at the bottom of the tower and packed for storage below the Tg. The ice containing particles can eventually mixed with the spacer starch particles to prevent sticking of the ice containing particles. This can be done by separately adding the spacer starch particles to the ice containing particles as they form in the spraying tower, but if not, the spacer starch particles can simply be added to the ice containing particles in a separate mixing device. Specific details and operational parameters of the equipment are provided in the examples.

Another embodiment of the present invention is to provide a packaged product that enables consumers to make milk shakes and smoothies at home on demand in a simple and easy way. The high surface area ice containing particles produced according to the methods described herein are most preferably packaged in a container that includes a removable lid. The product is maintained in a frozen condition until use. At that time, the lid is removed, milk or another liquid is added, the lid is replaced and the container is shaken by hand to form a thick and uniform blend.

The container can be of any suitable single serving size. Typically, the container will be able to accommodate a 340 g milk shake or smoothie product, but other container sizes such as those that can hold 113, 227, 454 or 567 g of product can be used. Typical materials for the container are treated paper, paperboard, plastics, paper-plastic laminates, paper-foil composites, or any other material that is used for holding fluids or beverages. Generally, styrofoam is preferred due to its insulating properties. The shape of cup and lid are not critical and conventional cylindrical shapes are entirely suitable.

The high surface area ice containing particles of the invention are placed into the container depending upon the size of the product. For a 340 g product, approximately 28 to 227 g, but preferably 142 to 199 g of ice containing particles are packaged in the container.

The container is packaged with a lid, typically made of a plastic material and having a configuration that releasably engages the rim of the container so that the lid can be applied to the container after the ice containing particles are placed therein, but which can be easily removed when the liquid is to be added to the container. Typically, the material of the lid is a thermoformable plastic so that it can be provided in the desired shape and have the necessary properties to function as described. Typically, the lid is temporarily removed so that a fluid can be added to the container. The lid can be press fit onto the top of the container in the same manner as conventional coffee cup lids, or the lid and container can be provided with a mating screw thread to secure the lid onto the container so that it can withstand the shaking process.

Other packaging arrangements can be provided. The ice containing particles can be provided in a pouch or sealed bag for storage at freezer temperatures until use. At that time, the user can simply open the bag, pour out the desired amount of particles in a container or cup, and then mix in the fluid. The particles can be provided in a lid that is intended to fit on a standard size cup. The lid includes a seal that is removed to allow the ice containing particles to fall into the cup for mixing with liquid that is already present in the cup of that is subsequently added after the particles are provided in the cup. Thereafter, the lid prevents leakage as the cup is shaken to mix the particles and liquid to form the drink. Alternatively, the particles can be directly added into the fluid in the cup with stirring to form the final frozen ice drink.

Various combinations of products can be achieved by the use of appropriate ice containing particle-fluid combinations. First of all, the ice containing particles can be made with any one of a number of different flavors of ice cream, sherbert, sorbets, frozen juice or the like, including low fat or light varieties. An initial determination of the flavor can be made upon the selection of the flavor of the particles. Next, the particular fluid can be selected to further enhance or complement the flavor of the particles. Any liquid can be used to achieve the desired product characteristics. Typical fluids such as milk, chocolate or other flavored milk, various fruit juices or mixtures thereof, coffees, teas or similar beverages, alcoholic beverages, such as tequila, vodka or others, and beverage forming mixes, such as margueritas or daiquiri mixes. From this non-exhaustive listing, it is seen that a multitude of combinations exist for forming single or multiple servings of all different kinds of frozen ice beverages. Generally, fluids such as whole milk, chocolate milk, skim milk or the like can be used to obtain a milk shake, or a fruit juice or fruit drink can be used when it is desired to obtain a smoothie or slush product

When a smoothie or slush frozen ice product is to be made, a juice is often used. Preferably, these juices are made of natural ingredients obtained from a fruit, vegetable or edible plant by crushing, squeezing or related operations. These juices may be filtered, strained, passed through a sieve, resin beds, clay or diatomaceous earth bed or filters, or ion exchange resins to give a juice, a juice concentrate, purees, and so-called modified juices. Specific types of juices which can be utilized in the present invention include fruit juice, concentrated fruit juice, fruit puree, fruit puree concentrate, modified juices, as well as modified concentrated juices and the like. Modified juices, for instance, would include ion exchange treated and/or ultrafiltered juices, or deodorized and decolorized ones. Examples of a few of the many specific juices which can be utilized in the product of the invention include, for example, peach concentrate, pear concentrate, blackberry puree, cranberry juice, apple concentrate, white grape juice, orange juice concentrate, grape concentrate, lemon juice concentrate, apple juice concentrate, etc. Of course, many other types of juices whether in the form of a puree, concentrate, or a juice can be utilized, depending upon the desired end flavor.

If desired, the fluid or liquid itself can include the necessary flavorants or colorants to achieve the desired flavor or color of the final product. These flavorants or colorants can already be combined in the liquid that is to be added or multiple liquids, one of milk or juice, a separate flavorant liquid and/or a separate colorant liquid can be added depending upon the desired properties of the final product. Alternatively, the flavorants or colorants can be added after the product is formed and then combined therein by use of a spoon or straw. This enables a partially colored or flavored product to be formed if desired.

The ice containing particles can be packaged in a number of different ways. Conveniently, the ice containing particles can be provided in a bag, pouch or other sealed container that is used for storage and shipping. This container can be of the same type used for transporting ice cream products. Alternatively, the container can be a cup or other vessel which is used both for transport and storage of the ice containing particles as well as for preparing the frozen ice drink.

In a preferred embodiment, the liquid is added into a cup or similar container that holds the ice containing particles and that includes a lid. The lid is removed to introduce liquid into the cup and then is replaced so that the liquid and ice particles can be shaken by hand for a sufficient period of time to form the frozen ice drink. Generally, hand shaking for approximately 10 to 80 seconds and preferably 30 to 60 seconds is sufficient for most single size servings. The amount of liquid would generally vary from 35% to 60% by weight based on the weight of the particles and liquid. The specific liquid and particles selected, along with the resulting desired thickness of the frozen product would contribute to the variation of the amount of liquid in the product. Of course, a skilled artisan can conduct routine tests to determine the preferred amount of liquid to use.

There is a significant difference in organoleptic properties between US and European frozen beverages. The US market generally prefers a colder and grainer beverage, whereas the European marked prefers a more fluid, eventually foamy or aerated and less cold product. Both types can be made according to the present invention by varying the sizes and relative amounts of particles and liquid in the beverage. The different sizes of the ice containing particles that are provided by the present invention are intended to address the different markets for such products. The larger particle sizes are more desirable when a more grainy US type product is desired, while the smaller particles are more desirable for European type products. In addition, the higher amounts of particles relative to the liquid are more desirable when a "colder" US type product is desired, while the lesser amounts of particles are more desirable for European type products. On a weight basis, the relative amounts of ice containing particles and liquid range from 10% to 60%, preferably 20% to 35% ice containing particles, and the balance liquid. On a volume basis of the ice containing particle powder the amounts are 18% to 75% ice containing particles, preferably 35% to 55%, and the balance liquid. Of course, a skilled artisan can conduct routine experiments to determine the optimum ratios to provide the specific type of beverage desired and the US or European consistencies or organoleptic properties.

In addition to the ice containing particles, the container can also include other components to form the final product For example, pieces of fruits, nuts, cereal, cookies or candies can be included in the container for inclusion in the final product These pieces can be uniformly mixed into the particles so that they will be relatively uniformly provided in the final product. The size of these pieces can vary from about the same size as the ice containing particles to larger sizes having about the same density as the ice containing particles. Alternatively, these pieces can be provided in a separate container or in the lid and added to the frozen product after it is formed, wherein they can be provided on the upper surface or mixed into the product using a spoon or straw.

Regarding additional ingredients, a surfactant component, preferably a poly glycerol ester (PGE), can be added to the ice containing particles to reduce surface tension, as well as to form additional interfacial/surface protection layers, supporting the reduction of stickiness and subsequent sintering of the ice containing particles during storage and when subjected to heat shocks. This would be in addition to the surfactant that is present in the ice containing particles.

For certain drinks, small amounts of various flavor enhancers or modifiers, generally food grade acids, can be utilized to impart tartness, enhance flavor, prevent oxidation of the ingredients or the like. For example, citric acid and other organic acids such as malic acid may be utilized to impart tartness or accentuate the flavor of the mixture. These are generally present in the liquid but if necessary can be included with the ice containing particles. Also, to prevent oxidation, ascorbic acid can be utilized.

The ice particles can be made in the equipment disclosed in German patent DE 19750679, the entire content of which is expressly incorporated herein by reference thereto.

To prepare the ice containing particles, the tower of German patent DE 19750679 can be used provided that certain geometry configurations are made allowing for the cold spraying production of ice containing powder particles with glass transition temperature Tg of -8°C in the particle size range of 0.1 to 1.5 mm (85% wt. between 0.2 and 1 mm).

In one embodiment, a tower height of 2 m; tower diameter 1.2 m; Spray temperature (cold gas evaporated nitrogen atmosphere) of -45°C to -50°C is used.

Alternatively, the tower height can be 4 m; tower diameter 1.2 m; Spray temperature (cold gas evaporated nitrogen atmosphere) -35°C to -40°C

### Examples

The following examples illustrate preferred embodiments of the invention.

### Example 1

The following formulation was prepared:

| **Ingredients** | **Concentration** |
|---|---|
| | |
| Water (reverse osmosis) | 83.9% |
| | |
| Surfactant (poly glycerol ester, PGE) | 1.0% |
| | |
| Sweetener (Aspartame) | 0.1 % |
| | |
| Tg elevating agent (Maltodextrin, 5 DE) | 15.0% |
| | |
| Total | 100.00% |

### Source of ingredients:

Aspartame from NutraSweet
Maltodextrin 5 DE from Cargill
PGE 55 from Danisco, Grindsted

### Procedure for making the ice containing particles was as follows:

In a process kettle, approximately half the amount of water used in the recipe was taken at ambient temperature (22°C). The pH was measured to ensure value in the 5.5 to 6 range and adjusted if necessary. The surfactant, PGE was added and mixed with the water and heated gradually. When the temperature reached approximately 60°C. the surfactant completely dissolved resulting in a milky white solution which was further heated to 80°C and held at that temperature for 5 minutes.

The solution was cooled down to room temperature and pH adjusted to 7.5 to 7.8 if necessary, using a 1M citric acid solution. The solution was transferred to a holding tank.

Similarly, in the process kettle, the remainder of the water was taken at ambient temperature. The aspartame and maltodextrin were added slowly with mixing, while heating the solution to a final temperature of 80°C before cooling to room temperature.

The above two solutions were mixed together with mild agitation (2040 rpm) to make a single homogenous solution which was stored at 4°C until used.

The density of the mix was measured before dividing into two parts to study the effects of overrun. The first portion of the mix was fed into an aeration device such as Mondomix (model SP75) to a final overrun of 150%.

The second portion of the mix was treated with a lower overrun (55%) and a lower air pressure at the nozzle (0.7 bar).

The mix was then introduced into a tower such as one similar to that of DE 19750679 and was sprayed into a cryogenic environment to form the ice containing particles. A process flow diagram is provided to illustrate a preferred arrangement.

Some of the process parameters used were:

Spray tower height: 3.7 m (2 to 4 m depending on the spraying temperature, particle diameter and heat capacity as well as thermal conductivity of the spray drops)
Nozzle diameter: 1 to 2 mm
Nozzle air pressure: 1.2 to 1.6 bar
Number of nozzles: 1 to 6

Multiple nozzles were arranged such that the spray cone overlapped without compromising the spraying characteristics, i.e., good spray lamella break up and spray dispersion were achieved. This control on the degree of spray agglomeration leads to larger particle size when necessary.
Flow rate (throughput) 13 1 /hr per nozzle
Overrun 150% used but this can vary from 0 to 400 % as desired; 0% often preferable Nitrogen atmosphere temperature: -40°C to -80°C or -50°C to -80°C

Cold soluble starch powder is preferably added to the ice containing particles after drying in an amount of 5% (2% to 10% by weight can be used) to the frozen powder and mixed well. The final "snow powder" of ice containing particles and spacer starch particles was stored at a temperature below -16°C.

When the spacer starch is to be added to the ice containing particles, a cold powder mixing device is provided after the tower. The temperature of this mixing device of course must be maintained below the Tg of the ice containing particles. The smaller spacer starch particles are then uniformly mixed and combined with the ice containing particles to form the final snow powder product.

The process flow diagram illustrates equipment in a particular arrangement for forming the product, along with additional or alternative process conditions.

## Claims

1. A process for preparing ice containing particles suitable for preparing a frozen ice drink which comprises;
preparing a liquid formulation that includes from 5 to 70 wt% of a glass transition temperature (Tg) elevating agent, from 0.01 to 1.25 wt % of a sweetener, from 0.25 to 25 wt % of a a surfactant and water so that the formulation has a Tg of -5°C to -15°C; and
spraying the liquid formulation into a cryogenic atmosphere that is at least 10°C below the Tg of the formulation to form a frozen mass to form ice containing particles and
associating a spacer starch with the ice containing particles after formation to provide spacing between and reduce sticking of the particles, wherein the spacer starch particles are smaller than the ice containing particles.

2. The process of claim 1, wherein the liquid formulation contains from 0.5 to 2 weight percent surfactant, from 0.05 to 0.5 weight percent sweetener and from 10 to 20 weight percent Tg elevating agent, wherein the surfactant is an ester and the sweetener is an artificial sweetener.

3. The process of claim 1 or 2, wherein the surfactant is a poly glycerol ester, poly glycerol mono stearate or poly glycerol poly ricinoleate, the sweetener is sucralose or acesulfame potassium, and the Tg elevating agent is a macromolecular biopolymer having a molecular weight of about 800 to 15,000 Daltons, and preferably from 5,000 to 15,000 Daltons.

4. The process of claim 1, 2, or 3, wherein the cryogenic atmosphere is at a temperature of -20°C to -200°C.

5. The process of claim 1, 2, 3, or 4, wherein the ice containing particles have a mean particle size of 0.1 to 5 mm, preferably of 0.2 to 0.8mm.

6. The process of claim 1, 2, 3, 4, or 5" which further comprises packaging the ice containing particles in a container.

7. The process of claim 6, wherein the container is a bag, pouch or other sealed container which is sized to hold single or multiple servings.

8. The process of claim 6, wherein the container is a cup that includes a removable lid.

9. The process of claim 6, wherein the container is a lid that holds the ice containing particles therein and that can be placed on a cup to introduce the ice containing particles into the cup

10. Ice containing particles obtainable by a process as defined in any of claims 1 to 9.

11. Ice containing particles according to claim 10, having irregular shapes and a principal diameter of 1 mm or less.

12. Use of the ice containing particles of claim 10 or 11 for the preparation of a milkshake or other frozen ice drink.

13. Use according to claim 12, wherein ice containing particles are combined spacer starch particles of smaller size and wherein the spacer starch particles are present in an amount of 1 to 10% by weight of the ice containing particles.

## Patentansprüche

1. Verfahren zur Herstellung eishaltiger Partikel, die zur Herstellung eines gefrorenen Eisgetränks geeignet sind, bei dem
eine flüssige Formulierung hergestellt wird, die von 5 bis 70 Gew.-% eines die Glasübergangstemperatur (Tg) erhöhenden Mittels, von 0,01 bis 1,25 Gew.% eines Süßungsmittels, von 0,25 bis 25 Gew.-% eines Tensids und Wasser enthält, sodass die Formulierung eine Tg von -5 °C bis -15 °C hat; und
die flüssige Formulierung in eine kryogene Atmosphäre gesprüht wird, die mindestens 10 °C unter der Tg der Formulierung ist, um eine gefrorene Masse zu bilden, um eishaltige Partikel zu bilden, und
eine Platzhalterstärke mit den eishaltigen Partikeln nach der Bildung in Verbindung gebracht wird, um zwischen den Partikeln Abstand zu schaffen und Verkleben zu reduzieren, wobei die Platzhalterstärkepartikel kleiner als die eishaltigen Partikel sind.

2. Verfahren nach Anspruch 1, wobei die flüssige Formulierung von 0,5 bis 2 Gew.-% Tensid, von 0,05 bis 0,5 Gew.-% Süßungsmittel und von 10 bis 20 Gew.-% Tgerhöhendes Mittel enthält, wobei das Tensid ein Ester ist und das Süßungsmittel ein künstliches Süßungsmittel ist.

3. Verfahren nach Anspruch 1 oder 2, wobei das Tensid ein Polyglycerinester, Polyglycerinmonostearat oder Polyglycerinpolyricinoleat ist, das Süßungsmittel Sucralose oder Acesulfam-Kalium ist, und das Tg-erhöhende Mittel ein makromolekulares Biopolymer mit einem Molekulargewicht von etwa 800 bis 15000 Dalton, und vorzugsweise von 5000 bis 15000 Dalton ist.

4. Verfahren nach Anspruch 1, 2 oder 3, wobei die kryogene Atmosphäre bei einer Temperatur von -20 °C bis -200 °C.

5. Verfahren nach Anspruch 1, 2, 3 oder 4, wobei die eishaltigen Partikel eine mittlere Teilchengröße von 0,1 bis 5 mm, vorzugsweise von 0,2 bis 0,8 mm haben.

6. Verfahren nach Anspruch 1, 2, 3, 4 oder 5, bei dem des Weiteren die eishaltigen Partikel in ein Behältnis gepackt werden.

7. Verfahren nach Anspruch 6, wobei das Behältnis eine Tasche, ein Beutel oder ein anderes dichtes Behältnis ist, welches zur Aufnahme von einzelnen oder mehreren Portionen bemessen ist.

8. Verfahren nach Anspruch 6, wobei das Behältnis eine Tasse ist, die einen abnehmbaren Deckel umfasst.

9. Verfahren nach Anspruch 6, wobei das Behältnis ein Deckel ist, der die eishaltigen Partikeln darin enthält, und der auf einer Tasse platziert werden kann, um die eishaltigen Partikeln in die Tasse einzubringen.

10. Eishaltige Partikel, erhältlich durch ein wie in einem der Ansprüche 1 bis 9 definiertes Verfahren.

11. Eishaltige Partikel nach Anspruch 10 mit unregelmäßigen Formen und einem Hauptdurchmesser von 1 mm oder weniger.

12. Verwendung der eishaltigen Partikel nach Anspruch 10 oder 11 zur Herstellung eines Milchshakes oder anderen gefrorenen Eisgetränks.

13. Verwendung nach Anspruch 12, wobei eishaltige Partikel kombinierte Platzhalterstärkepartikel von kleinerer Größe sind und wobei die Platzhalterstärkepartikel in einer Menge von 1 bis 10 Gew.-% der eishaltigen Partikel vorliegen.

## Revendications

1. Un procédé pour la préparation de particules contenant de la glace, appropriées pour la préparation d'une boisson glacée congelée, lequel procédé comprend les étapes suivantes :
préparation d'une formulation liquide qui comprend de 5 à 70 % en poids d'un agent élevant la température de transition vitreuse (Tg), de 0,01 à 1,25 % en poids d'un édulcorant, de 0,25 à 25 % en poids d'un agent tensio-actif et de l'eau de telle sorte que la formulation a une Tg de -5 °C à -15 °C ; et
pulvérisation de la formulation liquide dans une atmosphère cryogène qui est au moins 10 °C en dessous de la Tg de la formulation afin de former une masse congelée pour former des particules contenant de la glace et
association d'un amidon espaceur avec les particules contenant de la glace après la formation afin de ménager de l'espace entre les particules et afin de réduire le collage des particules, dans lequel procédé les particules d'amidon espaceur sont plus petites que les particules contenant de la glace.

2. Le procédé selon la revendication 1, dans lequel la formulation liquide contient entre 0,5 et 2 % en poids d'agent tensio-actif, de 0,05 à 0,5 % en poids d'édulcorant et de 10 à 20 % en poids d'agent élevant la Tg, dans lequel l'agent tensio-actif est un ester et l' édulcorant est un édulcorant artificiel.

3. Le procédé selon la revendication 1 ou 2, dans lequel l'agent tensio-actif est un ester de polyglycérol, un monostéarate de polyglycérol ou un polyricinoléate de polyglycérol, l'édulcorant est du sucralose ou de l'acésulfame de potassium, et l'agent élevant la Tg est un biopolymère macromoléculaire ayant une masse moléculaire d'environ 800 à 15000 daltons, et de préférence entre 5000 et 15000 daltons.

4. Le procédé selon la revendication 1, 2, ou 3, dans lequel l'atmosphère cryogène est à une température comprise entre -20 °C et -200 °C.

5. Le procédé selon la revendication 1, 2, 3, ou 4, dans lequel les particules contenant de la glace ont une taille de particule moyenne de 0,1 à 5 mm, de préférence de 0,2 à 0,8 mm.

6. Le procédé selon la revendication 1, 2, 3, 4, ou 5, qui comprend en outre le conditionnement des particules contenant de la glace dans un récipient.

7. Le procédé selon la revendication 6, dans lequel le récipient est un sac, une poche ou un autre récipient scellé qui est dimensionné de manière à contenir une portion unique ou des portions multiples.

8. Le procédé selon la revendication 6, dans lequel le récipient est une coupe qui comprend un opercule amovible.

9. Le procédé selon la revendication 6, dans lequel le récipient a un opercule qui maintient les particules contenant de la glace à l'intérieur et qui peut être placé sur une tasse pour introduire les particules contenant de la glace dans la tasse.

10. Particules contenant de la glace susceptibles d'être obtenues par un procédé tel que défini dans l'une quelconque des revendications 1 à 9.

11. Particules contenant de la glace selon la revendication 10, ayant des formes irrégulières et un diamètre principal de 1 mm ou moins.

12. Utilisation des particules contenant de la glace selon la revendication 10 ou 11 pour la préparation d'un milkshake ou d'une autre boisson glacée congelée.

13. Utilisation selon la revendication 12, dans laquelle les particules contenant de la glace sont des particules d'amidon espaceur combinées de taille plus petite, et dans laquelle les particules d'amidon espaceur sont présentes selon une quantité de 1 à 10 % en poids des particules contenant de la glace.
